# EUROPÄISCHE PATENTSCHRIFT

(11) **EP 4 259 917 B1**
(45) Veröffentlichungstag und Bekanntmachung des Hinweises auf die Patenterteilung: **08.01.2025**
(21) Anmeldenummer: 21819371.2
(22) Anmeldetag: 22.11.2021
(51) Int. Cl.: F02D 41/22, G01N 15/06, F02D 41/14

(54) **VERFAHREN ZUR FUNKTIONSKONTROLLE EINES SENSORS ZUR DETEKTION VON RUSSPARTIKELN IN EINEM ABGAS**
METHOD FOR MONITORING THE FUNCTION OF A SENSOR FOR DETECTING SOOT PARTICLES IN AN EXHAUST GAS
PROCÉDÉ DE SURVEILLANCE DE LA FONCTION D'UN CAPTEUR DE DÉTECTION DE PARTICULES DE SUIE DANS UN GAZ D'ÉCHAPPEMENT

(30) Priorität: 08.12.2020 DE 102020215456
(43) Veröffentlichungstag der Anmeldung: 18.10.2023
(73) Patentinhaber: Robert Bosch GmbH, 70442 Stuttgart (DE)
(72) Erfinder: DI MIRO, Ariel, 70327 Stuttgart (DE); BAARS, Enno, 71229 Leonberg (DE); GRIMMINGER, Jens, 71229 Leonberg (DE); HONER, Michael, 70839 Gerlingen (DE); HARTMANN, Gerd, 76356 Weingarten (DE); KAMP, Bernhard, 71732 Tamm (DE); BESSEN, Michael, 70190 Stuttgart (DE)
(86) Internationale Anmeldenummer: PCT/EP2021/082434
(87) Internationale Veröffentlichungsnummer: WO 2022/122355

(56) Entgegenhaltungen:
- WO-A1-97/08441
- DE-A1- 102012 210 525
- DE-A1- 102018 219 625
- US-B2- 8 640 526

## Beschreibung

### Stand der Technik

Aus dem Stand der Technik, z.B. DE 10 2004 046 882 A1, sind bereits Sensoren zur Detektion von Rußpartikeln in einem Abgas bekannt, die zwei dem Abgas ausgesetzte und voneinander beabstandete Messelektroden aufweisen und eine Oberfläche aufweisen, auf der die Messelektroden angeordnet sind, und einen elektrischen Widerstandsheizer aufweisen, um auf den Messelektroden und auf der Oberfläche angelagerte Rußpartikel zu verbrennen, und eine Temperaturmesseinrichtung aufweisen, um die Temperatur des Sensors zu bestimmen.

Das Funktionsprinzip dieser Sensoren basiert darauf, auf dem Sensor bzw. auf der Oberfläche zwischen den Messelektroden Ruß aus dem Abgas aufzusammeln, woraus dann eine gewisse elektrische Leitfähigkeit zwischen den Messelektroden resultiert und als Maß für die Rußmenge im Abgas nachgewiesen werden kann.

Derartige Sensoren kommen beispielsweise in Abgassystemen von Kraftfahrzeugen mit Dieselmotoren zum Einsatz, um Partikelfilter zu überwachen.

Aus dem Stand der Technik sind ferner bereits Verfahren zur Funktionsdiagnose des Sensors bekannt, die überprüfen, inwiefern eine Leitfähigkeit zwischen den Elektroden auch in Abwesenheit von Ruß vorhanden ist, inwiefern es also zu sogenannten Nebenschlüssen kommt, und die vorsehen, den Sensor als defekt zu betrachten, wenn diese Nebenschlüsse ein tolerierbares Maß überschreiten. Es ist die Aufgabe der vorliegenden Erfindung, derartige Verfahren mit Hinblick auf die Robustheit des Ergebnisses zu verbessern.

Die DE 10 2018 219 625 A1 der Anmelderin offenbart ein Verfahren zur Funktionskontrolle eines Sensors.

### Offenbarung der Erfindung

Um die Abwesenheit von Ruß herbeizuführen, sieht die Erfindung als zeitlich vorangehenden Schritt das Aufheizen des Sensors mit dem Widerstandsheizer vor, sodass möglichst alle auf den Messelektroden und auf der Oberfläche angelagerten Rußpartikel verbrennen. Dies erfolgt beispielsweise bei einer Temperatur von 725°C.

In einer nachfolgenden Phase wird dem Sensor Gelegenheit gegeben, sich abzukühlen. Es kann dazu eine feste Zeit gewartet werden oder es kann gewartet werden, bis sich der Sensor auf eine Einschalttemperatur abgekühlt hat. Letztere kann beispielsweise 425°C betragen und mit einer in den Sensor integrierten Temperaturmesseinrichtung festgestellt werden. Das Ende dieser Phase wird hier als Einschaltzeitpunkt bezeichnet.

Zum Einschaltzeitpunkt kann eine Spannung zwischen den Messelektroden angelegt werden beispielsweise 45,6V. D.h. die Spannung zwischen den Messelektroden kann zu diesem Zeitpunkt auf diesen Wert geändert werden, beispielsweise ausgehend von 0V; sie kann andererseits diesen Wert bereits vor dem Einschaltzeitpunkt aufweisen und in dem Sinne angelegt werden, dass sie zum Einschaltzeitpunkt beibehalten wird. In jedem Fall wird zum Einschaltzeitpunkt erneut begonnen, Rußpartikel auf dem Sensor anzusammeln.

Einerseits kann gerade zum Einschaltzeitpunkt davon ausgegangen werden, dass sich noch keine Rußpartikel auf dem Sensor befinden, was diesen Zeitpunkt attraktiv für eine Messung im Rahmen der Funktionsdiagnose des Sensors macht.

Anderseits haben die Erfinder beobachtet, dass bei hohen Temperaturen eine gewisse elektrische Leitfähigkeit zwischen den Messelektroden durch den Sensor selbst, also unabhängig von Rußpartikeln zwischen den Messelektroden, vorhanden sein kann, die bei geringeren Temperaturen in der Regel nur in geringerem Maß vorhanden ist. Zum Einschaltzeitpunkt können daher noch Ströme zwischen den Messelektroden durch den Sensor hindurch in einem erhöhten Maß auftreten. Bei weiterem Zuwarten und der damit verbundenen Abkühlung des Sensors vermindern sich diese Ströme im Allgemeinen und stellen sich nachfolgend möglicherweise doch noch als tolerabel heraus. Insofern wäre ein Zeitpunkt für eine Messung im Rahmen der Funktionsdiagnose des Sensors attraktiv, der zeitlich möglichst weit nach dem Einschaltzeitpunkt liegt.

Die vorliegende Erfindung löst diese beiden zunächst widersprüchlich erscheinenden Erwägungen hinsichtlich des Zeitpunkts der Messung auf, indem im Anschluss an die bereits beschriebenen Verfahrensschritte folgende Verfahrensschritte vorgesehen sind:
- Bestimmen eines ersten Stromflusses durch die Messelektroden; dann
- Bestimmen einer Wartezeit aus dem ersten Stromfluss, wobei für die Wartezeit ein umso größerer Wert bestimmt wird, je größer der erste Stromfluss ist; dann
- Abwarten der Wartezeit, wobei sich der Sensor weiter abkühlt; dann
- Anlegen einer Spannung zwischen den Messelektroden (also einen Spannungswert von beispielsweise 45,6 V zwischen den Messelektroden beibehalten oder eine Spannung zwischen den Messelektroden auf einen Spannungswert von beispielsweise 45,6 V ändern) und Bestimmen eines zweiten Stromflusses durch die Messelektroden; dann
- Bewerten, dass das Sensorelement in Ordnung ist, falls der zweite Stromfluss kleiner als ein Schwellwert, beispielsweise 5µA, ist und Bewerten, dass der Sensor defekt ist, falls der der zweite Stromfluss größer als der Schwellwert ist.

Hinter diesem Vorgehen verbirgt sich folgende Überlegung: Je höher der erste Stromfluss ist, desto länger wird dem Sensor Gelegenheit gegeben, sich weiter abzukühlen, sodass sich in der nachfolgenden Messung des zweiten Stromflusses möglicherweise doch noch herausstellen könnte, dass dieser kleiner ist als ein Schwellwert, also so klein ist, dass davon ausgegangen werden kann, dass kein Nebenschluss vorliegt, der Sensor also in Ordnung ist.

Durch die längere Wartezeit muss anderseits in Kauf genommen werden, dass sich vor der Messung der zweiten Stromstärke möglicherweise bereits neuer Ruß auf dem Sensor ansammelt und auf diese Weise eine gewisse Leitfähigkeit zwischen den Elektroden erzeugt, die potentiell als Nebenschluss interpretiert werden könnte. Um dies zu vermeiden, sollte die Wartezeit vor der zweiten Strommessung also umso kürzer gewählt werden, je niedriger der erste Stromfluss ist. Wenn der erste Stromfluss bereits kleiner ist als der Schwellwert, kann optional sogar unmittelbar geschlossen werden, dass kein Nebenschluss vorliegt und der Sensor in Ordnung ist.

Der Schwellwert kann beispielsweise 5µA betragen.

Unter Messelektroden sind im Rahmen der vorliegenden Erfindung Elektroden zu verstehen, die geeignet sind zur Messung eines Stroms und/oder einer elektrischen Spannung. Die Messelektroden können insbesondere als Interdigitalelektroden ausgebildet sein, also als ineinander eingreifende Messelektroden, beispielsweise zwei oder mehr ineinander eingreifende Kammstrukturen.

Es kann vorgesehen sein, dass das Verfahren in regelmäßigen zeitlichen Abständen wiederholt wird. Dabei kann vorgesehen sein, dass das Ergebnis der Bewertung stets zu einem festen Zeitpunkt nach Beginn des Verfahrens oder nach dem Einschaltzeitpunkt an das Motorsteuergerät übermittelt wird, und zwar unabhängig von der jeweiligen Wartezeit.

Die Umsetzung des erfindungsgemäßen Verfahrens kann über eine Software erfolgen. Beispielsweise kann die Durchführung in Form eines Computerprogramms erfolgen, das auf einem elektronischen Speichermedium gespeichert sein kann.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Explosionsdarstellung eines Sensors zur Detektion von Teilchen,
- Figur 2: ein Flussdiagramm des erfindungsgemäßen Verfahrens,
- Figur 3: eine Darstellung des zeitlichen Verlaufs von der Stromstärke zwischen den Messelektroden und der Temperatur des Sensors während eines Ausführungsbeispiels des erfindungsgemäßen Verfahrens.

### Ausführungsformen der Erfindung

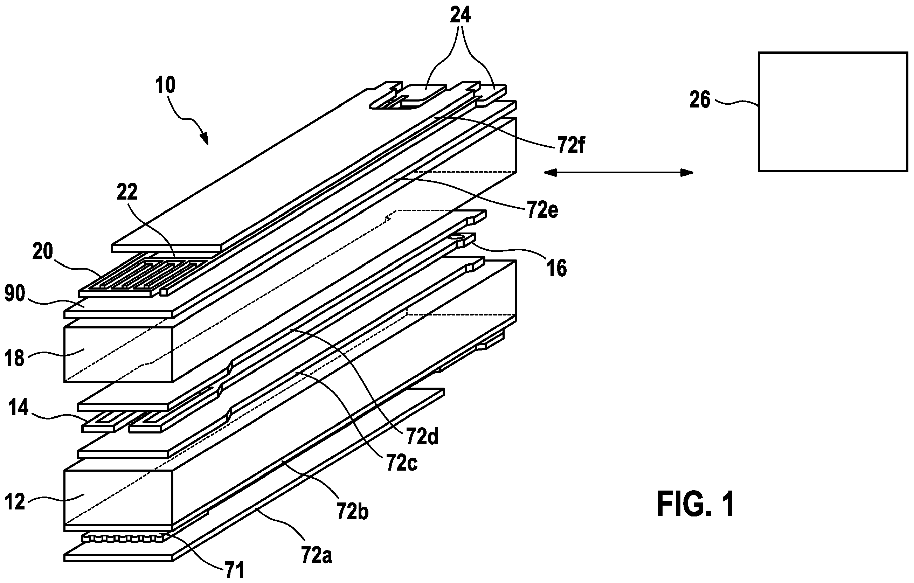

Figur 1 zeigt einen Sensor 10 zur Detektion von Ruß in einem Abgasstrom einer Brennkraftmaschine. Der Sensor 10 ist beispielsweise in einen Abgasstrang eines Kraftfahrzeugs stromabwärts eines Dieselpartikelfilters verbaut.

Der Sensor 10 weist eine erste Trägerschicht 12 und eine zweite Trägerschicht 18 auf, die jeweils auf Basis einer keramischen Folie hergestellt sein können und beispielsweise aus Zirkonoxid bestehen. Zwischen den Trägerschichten 12 ist ein Heizelement 14 integriert, das über Kontaktierungen 16 mit einem Steuergerät 26 oder einer geeigneten Spannungsquelle verbindbar ist und zum Freibrennen des Sensors 10 von gegebenenfalls abgelagerten Teilchen, wie Rußpartikeln, dient. Zwischen dem Heizelement 14 und den Trägerschichten 12, 18 ist dabei jeweils noch eine Isolationsschicht 72c, 72d angeordnet, die beispielsweise drucktechnisch aus Al2O3 gefertigt sein kann.

Auf der zweiten Trägerschicht 18 ist eine Isolationsschicht 72e, die beispielsweise drucktechnisch aus Al2O3 gefertigt ist, angeordnet und auf deren Oberfläche 90 ist eine Struktur aus zwei Messelektroden 20, 22 angeordnet. Beispielsweise sind die Messelektroden 20, 22 als Interdigitalelektroden ausgebildet, so dass sie wie gezeigt kammförmig ineinandergreifen. Die Messelektroden 20, 22 sind über Kontaktierungen 24 mit einem elektronischen Steuergerät 26 verbindbar. Zuleitungen zwischen den Messelektroden 20, 22 und den Kontaktierungen 24 können durch eine Isolationsschicht 72f abgedeckt sein, die drucktechnisch aus Al2O3 gefertigt sein kann.

In der Figur 1 unterhalb der ersten Trägerschicht 12 ist ein Temperaturmesselement 71 angeordnet, das ebenfalls mit dem elektronischen Steuergerät 26 verbindbar ist. Unmittelbar oberhalb und unterhalb des Temperaturmesselements 71 ist wiederum jeweils eine Isolationsschicht 72a, 72b angeordnet, die beispielsweise drucktechnisch aus Al2O3 gefertigt sein kann.

Der Sensor 10 kann ferner ein Gehäuse umfassen, das den in Figur 1 dargestellten Aufbau umgibt und aus Gründen der Vereinfachung der Erläuterung des Aufbaus des Sensors 10 in Figur 1 nicht gezeigt ist. Beispielsweise kann das Gehäuse als Fanghülse ausgebildet sein, die in einem oberhalb der Messelektroden 20, 22 liegenden Bereich mit einer Öffnung versehen ist und zur Beruhigung eines in dem Abgasstrang strömenden Gasstroms dient.

Der Sensor 10 nach der Figur 1 kann wie folgt arbeiten. Wenn sich auf der Oberfläche 90 Ruß bzw. sonstige elektrisch leitenden Teilchen ablagern, so reduziert sich ein elektrischer Widerstand zwischen den beiden Messelektroden 20, 22.

Zur Regeneration des Sensors 10 werden die angelagerten Teilchen nach gewisser Zeit mittels des Heizelements 14 abgebrannt. Bei funktionstüchtigem Sensor 10 sollte nach diesem so genannten Ausheizen der Widerstand zwischen den Messelektroden 20, 22 deutlich ansteigen.

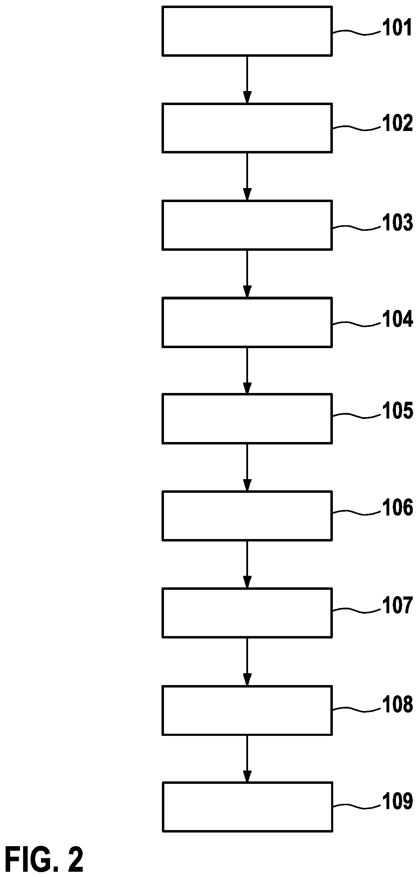

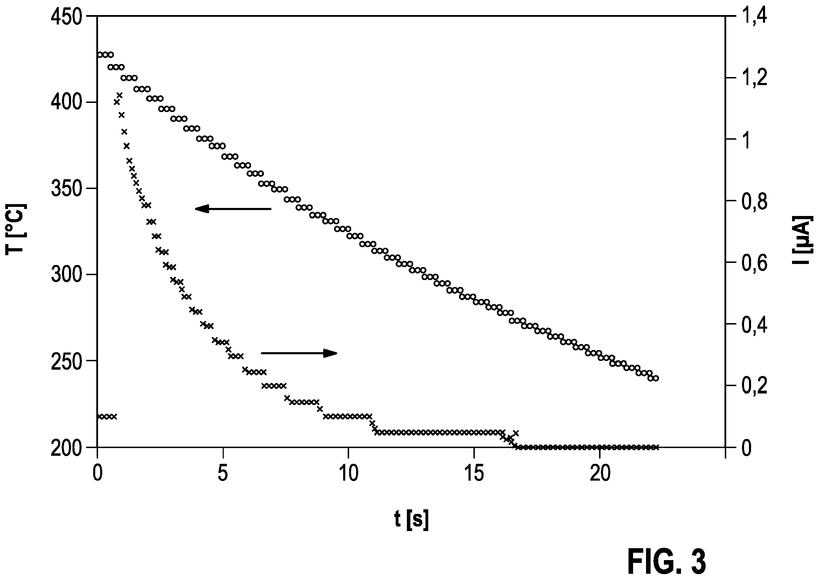

Da die Arbeitsweise des Sensors 10 zur Detektion der Teilchenkonzentration im Übrigen an sich bekannt ist, beispielsweise aus der WO 2003/006976 A2, wird an dieser Stelle nicht noch näher auf die gewöhnliche Arbeitsweise des Sensors 10 eingegangen. Stattdessen wird nun das erfindungsgemäße Verfahren zur Funktionskontrolle des Sensors 10 beschrieben. Das Verfahren kann beispielsweise von dem oben genannten Steuergerät 26 durchgeführt werden. Nachfolgend wird das Verfahren beispielhaft anhand der Figuren 2 und 3 beschrieben.

Figur 2 zeigt ein Flussdiagramm des erfindungsgemäßen Verfahrens. Figur 3 zeigt dazugehörig eine Darstellung des zeitlichen Verlaufs von der Stromstärke I zwischen den Messelektroden 20, 22 (rechte Skala, Darstellung durch Kreuze) und der Temperatur T des Sensors 10 (linke Skala, Darstellung durch Kreise) während eines Ausführungsbeispiels des erfindungsgemäßen Verfahrens.

In einem ersten, zeitlich vorangehenden Verfahrensschritt 101, t << 0s in Figur 3, ist vorgesehen, den Sensor 10 mit seinem Widerstandsheizer 14 auf beispielsweise 725°C zu erhitzen und diese Temperatur ausreichend lange beizubehalten, sodass auf den Messelektroden 20, 22 und auf der Oberfläche 90 angelagerte Rußpartikel vollständig verbrennen. Die Temperatur T kann beispielsweise mit Hilfe der Temperaturmesseinrichtung 71 des Sensors eingeregelt werden, die in der Figur 1 dargestellt ist. In diesem Beispiel liegen die Messelektroden 20, 22 in dieser Phase auf dem gleichen elektrischen Potential, sodass zwischen ihnen im Wesentlichen keine Spannung anliegt und kein Stromfluss erfolgt.

Im nachfolgenden Verfahrensschritt 102, t < 0s in Figur 3, ist der Widerstandsheizer 14 deaktiviert und der Sensor 10 kühlt sich ab, bis auf eine Temperatur T von 425°C zum Zeitpunkt t=0. Diese Temperatur T bzw. dieser Zeitpunkt t kann wiederum beispielsweise mit Hilfe der Temperaturmesseinrichtung 71 des Sensors 10 festgestellt werden.

Zum Zeitpunkt t=0 wird in diesem Beispiel die Spannung zwischen den Messelektroden 20, 22 von 0V auf 45,6V erhöht (Verfahrensschritt 103). Der Zeitpunkt t=0 wird hier darum auch als Einschaltzeitpunkt bezeichnet. Aufgrund des Spanungsverlaufs zwischen den Messelektroden 20, 22 in Zusammenwirkung mit dem Verlauf der Temperatur T des Sensors 10 markiert der Einschaltzeitpunkt auch den Beginn der erneuten Rußablagerung an dem Sensor.

Daraufhin erfolgt die Messung eines ersten Stromflusses durch die Messelektroden 20, 22 (Verfahrensschritt 104). Die Messung kann einerseits unmittelbar zum Einschaltzeitpunkt durchgeführt werden. Alternativ kann auch ein Maximum des Stroms innerhalb eines Zeitraums von beispielsweise 3s nach dem Einschaltzeitpunkt als erster Stromfluss ermittelt werden. Der möglicherweise verfälschende Einfluss von Einschaltvorgängen auf den Stromfluss zwischen den Messelektroden 20, 22, die mit dem Anlegen der Spannung zwischen den Messelektroden 20, 22 zum Zeitpunkt t=0 einhergeht, lässt sich auf diese Weise vermeiden.

Sobald die erste Stromstärke bekannt ist, wird aus ihr eine Wartezeit abgeleitet (Verfahrensschritt 105). Im Beispiel ist vorgesehen, dass die Wartezeit 0s beträgt, wenn die Stromstärke kleiner ist als ein Schwellwert, der in diesem Beispiel 5µA beträgt. In diesem Fall kann dann unmittelbar, also ohne Weiteres geschlossen werden, dass kein Nebenschluss vorliegt. Alternativ kann festgelegt werden, dass die Wartezeit 0s beträgt. Ferner ist im Beispiel vorgesehen, dass die Wartezeit 5s beträgt, falls die erste Stromstärke 5µA beträgt, dass die Wartezeit 6s beträgt, falls die erste Stromstärke 7,5µA beträgt, dass die Wartezeit 7,5s beträgt, falls die erste Stromstärke 10µA beträgt, dass die Wartezeit 10s beträgt, falls die erste Stromstärke 12,5µA beträgt und dass die Wartezeit 14,9s beträgt, falls die erste Stromstärke 15µA beträgt. All diese Werte können beispielsweise paarweise hinterlegt sein oder durch eine Kennlinie oder durch einen funktionalen Zusammenhang analytisch hinterlegt sein.

Im vorliegenden Beispiel wurde kurz nach dem Einschaltzeitunkt gemessen, dass die erste Stromstärke den Wert 1,15 µA hat. Daraus konnte unmittelbar geschlossen werden, dass kein Nebenschluss vorliegt, der Sensor also in Ordnung ist, ohne dass es hierfür einer zweiten Messung bedurft hätte.

Im Übrigen bzw. alternativ sieht das erfindungsgemäße Verfahren in diesem Ausführungsbeispiel vor, dass die Zeitspanne abgewartet wird, die der zuvor bestimmten Wartezeit entspricht, also beispielsweise 10s, falls die erste Stromstärke 12,5µA betragen hätte (Verfahrensschritt 106). Während dieser Zeit kühlt sich der Sensor 10 weiter ab. Die Spannung zwischen den Messelektroden 20, 22 von beispielsweise 45,6V wird konstant aufrecht erhalten.

Sodann erfolgt die Messung eines zweiten Stromflusses zwischen den Messelektroden 20, 22 (Verfahrensschritt 107).

Wenn der zweite Stromfluss größer ist als der Schwellwert oder gleich ist dem Schwellwert, der in diesem Beispiel 5µA beträgt, wird bewertet, dass der Sensor defekt ist. Wenn der zweite Stromfluss hingegen kleiner ist als der Schwellwert, wird bewertet, dass der Sensor in Ordnung ist (Verfahrensschritt 108).

Das Ergebnis der Bewertung wird an ein Motorsteuergerät übertragen, in diesem Beispiel wird es unabhängig von dem Ergebnis und unabhängig von der Wartezeit und unabhängig davon, ob eine zweite Messung der Stromstärke erfolgt ist, stets zu einem festen Zeitpunkt, beispielsweise zum Zeitpunkt t=18s, übertragen (Verfahrensschritt 109).

## Patentansprüche

1. Verfahren zur Funktionskontrolle eines Sensors (10) zur Detektion von Rußpartikeln in einem Abgas, wobei der Sensor (10) mindestens zwei dem Abgas ausgesetzte und voneinander beabstandete Messelektroden (20, 22) aufweist und eine Oberfläche (90) aufweist, auf dem die Messelektroden (20, 22) angeordnet sind, und einen elektrischen Widerstandsheizer (14) aufweist, um auf den Messelektroden (20, 22) und auf der Oberfläche (90) angelagerte Rußpartikel zu verbrennen, und insbesondere auch eine Temperaturmesseinrichtung (71) aufweist, um die Temperatur (T) des Sensors (10) zu bestimmen, wobei das Verfahren die folgenden Schritte umfasst:
- Aufheizen des Sensors (10) mit dem Widerstandsheizer (14), sodass auf den Messelektroden (20, 22) und auf der Oberfläche (90) angelagerte Rußpartikel verbrennen; dann
- Abwarten einer bestimmten Zeitspanne oder Abwarten bis sich der Sensor (10) auf eine Einschalttemperatur abgekühlt hat, zum Beispiel auf 425°C; dann
- Anlegen einer Spannung zwischen den Messelektroden (20, 22) und Bestimmen eines ersten Stromflusses durch die Messelektroden (20, 22); dann
- Bestimmen einer Wartezeit aus dem ersten Stromfluss, wobei für die Wartezeit ein umso größerer Wert bestimmt wird, je größer der erste Stromfluss ist; dann
- Abwarten der Wartezeit, wobei sich der Sensor (10) weiter abkühlt; dann
- Anlegen einer Spannung zwischen den Messelektroden (20, 22) und Bestimmen eines zweiten Stromflusses durch die Messelektroden (20, 22); dann
- Bewerten, dass das Sensorelement (10) in Ordnung ist, falls der zweite Stromfluss kleiner als ein Schwellwert, beispielsweise 5µA, ist und bewerten, dass der Sensor (10) defekt ist, falls der der zweite Stromfluss größer als der Schwellwert ist.

2. Verfahren nach Anspruch 1, **dadurch gekennzeichnet, dass** während dem Verfahren die Spannung zwischen den Messelektroden (20, 22) zunächst 0V beträgt und erst bei Erreichen der Einschalttemperatur zwischen den Messelektroden (20, 22) eine von 0V verschiedene Spannung angelegt wird, zum Beispiel 45,6V, die mindestens bis zur Bestimmung des zweiten Stromflusses aufrechterhalten wird.

3. Verfahren nach Anspruch 2, **dadurch gekennzeichnet, dass** der erste Stromfluss als der maximale Stromfluss erfasst wird, der innerhalb eines Einschaltintervalls, von beispielsweise bis zu 3s, nach dem Anlegen der von 0V verschiedenen Spannung gemessen wird.

4. Verfahren nach Anspruch 1, **dadurch gekennzeichnet, dass** während dem gesamten Verfahren zwischen den Messelektroden (20, 22) eine konstante Spannung anliegt, zum Beispiel 45,6 V.

5. Verfahren nach einem der vorangehenden Ansprüche, **dadurch gekennzeichnet, dass** dann, wenn der erste Stromfluss bereits kleiner ist als der Schwellwert, unmittelbar bewertet wird, dass der Sensor (10) in Ordnung ist.

6. Verfahren nach einem der vorangehenden Ansprüche, **dadurch gekennzeichnet, dass** die Wartezeit aus dem ersten Stromfluss mittels einer hinterlegten Funktion oder mittels hinterlegten Wertepaaren bestimmt wird.

7. Verfahren nach einem der vorangehenden Ansprüche, wobei das Ergebnis der Bewertung an ein Motorsteuergerät übermittelt wird.

8. Verfahren, bei dem das Verfahren gemäß Anspruch 6 wiederholt durchgeführt wird und das Ergebnis der Bewertung stets zu einem festen Zeitpunkt nach Beginn des Verfahrens nach Anspruch 6 oder nach dem Einschaltzeitpunkt an das Motorsteuergerät übermittelt wird.

9. Steuergerät (26), welches eingerichtet ist, jeden Schritt des Verfahrens nach einem der vorhergehenden Ansprüche durchzuführen.

10. Computerprogramm, welches eingerichtet ist, jeden Schritt des Verfahrens nach einem der Ansprüche 1-8 durchzuführen, wenn es auf einem Steuergerät nach Anspruch 9 ausgeführt wird.

11. Elektronisches Speichermedium, auf welchem ein Computerprogramm nach Anspruch 10 gespeichert ist.

12. Elektronisches Steuergerät (26), welches ein elektronisches Speichermedium nach Anspruch 11 umfasst.

## Claims

1. Method for monitoring the function of a sensor (10) for detecting soot particles in an exhaust gas, wherein the sensor (10) has at least two measuring electrodes (20, 22), which are exposed to the exhaust gas and which are spaced apart from one another, and a surface (90) on which the measuring electrodes (20, 22) are arranged, and an electrical resistance heater (14) for burning the soot particles accumulated on the measuring electrodes (20, 22) and on the surface (90), and in particular also has a temperature measuring device (71) for determining the temperature (T) of the sensor (10), wherein the method comprises the following steps:
- heating the sensor (10) using the resistance heater (14) so that soot particles accumulated on the measuring electrodes (20, 22) and on the surface (90) burn; then
- waiting for a certain period of time or waiting until the sensor (10) has cooled down to a switch-on temperature, for example to 425°C; then
- applying a voltage between the measuring electrodes (20, 22) and determining a first current flow through the measuring electrodes (20, 22); then
- determining a waiting time from the first current flow, wherein the greater the first current flow, the greater the value determined for the waiting time; then
- waiting for the waiting time, wherein the sensor (10) continues to cool down; then
- applying a voltage between the measuring electrodes (20, 22) and determining a second current flow through the measuring electrodes (20, 22); then
- evaluating that the sensor element (10) is in order if the second current flow is lower than a threshold value, for example 5 µA, and evaluating that the sensor (10) is defective if the second current flow is greater than the threshold value.

2. Method according to Claim 1, **characterized in that**, during the method, the voltage between the measuring electrodes (20, 22) is initially 0 V and a voltage other than 0 V, for example 45.6 V, which is maintained at least until the second current flow is determined, is applied between the measuring electrodes (20, 22) only when the switch-on temperature is reached.

3. Method according to Claim 2, **characterized in that** the first current flow is recorded as the maximum current flow which is measured within a switch-on interval, for example of up to 3 s, after the voltage other than 0 V has been applied.

4. Method according to Claim 1, **characterized in that** a constant voltage is present between the measuring electrodes (20, 22), for example 45.6 V, over the entire method.

5. Method according to one of the preceding claims, **characterized in that**, when the first current flow is already lower than the threshold value, it is immediately evaluated that the sensor (10) is in order.

6. Method according to one of the preceding claims, **characterized in that** the waiting time is determined from the first current flow by means of a stored function or by means of stored value pairs.

7. Method according to one of the preceding claims, wherein the result of the evaluation is transmitted to an engine control unit.

8. Method in which the method according to Claim 6 is carried out repeatedly and the result of the evaluation is always transmitted to the engine control unit at a fixed time after the start of the method according to Claim 6 or after the switch-on time.

9. Control unit (26) which is configured to carry out each step of the method according to one of the preceding claims.

10. Computer program which is configured to carry out each step of the method according to one of Claims 1-8 when it is executed on a control unit according to Claim 9.

11. Electronic storage medium on which a computer program according to Claim 10 is stored.

12. Electronic control unit (26) which comprises an electronic storage medium according to Claim 11.

## Revendications

1. Procédé de contrôle de fonctionnement d'un capteur (10) pour la détection de particules de suie dans un gaz d'échappement, dans lequel le capteur (10) présente au moins deux électrodes de mesure (20, 22) exposées au gaz d'échappement et espacées l'une de l'autre, et présente une surface (90) sur laquelle sont disposées les électrodes de mesure (20, 22), et présente un élément chauffant à résistance électrique (14) pour brûler des particules de suie accumulées sur les électrodes de mesure (20, 22) et sur la surface (90), et présente en particulier aussi un dispositif de mesure de température (71) pour déterminer la température (T) du capteur (10), le procédé comprenant les étapes suivantes consistant à :
- chauffer le capteur (10) à l'aide de l'élément chauffant à résistance (14) de sorte que des particules de suie accumulées sur les électrodes de mesure (20, 22) et sur la surface (90) brûlent ; ensuite
- attendre pendant un laps de temps déterminé ou attendre jusqu'à ce que le capteur (10) ait refroidi jusqu'à une température d'enclenchement, par exemple jusqu'à 425 °C ; ensuite
- appliquer une tension entre les électrodes de mesure (20, 22) et déterminer un premier flux de courant à travers les électrodes de mesure (20, 22) ; ensuite
- déterminer un temps d'attente à partir du premier flux de courant, dans lequel une valeur d'autant plus grande est déterminée pour le temps d'attente que le premier flux de courant est grand ; ensuite
- attendre pendant le temps d'attente, le capteur (10) continuant à se refroidir ; ensuite
- appliquer une tension entre les électrodes de mesure (20, 22) et déterminer un deuxième flux de courant à travers les électrodes de mesure (20, 22) ; ensuite
- juger que l'élément capteur (10) est conforme si le deuxième flux de courant est inférieur à une valeur seuil, par exemple 5 µA, et juger que le capteur (10) est défectueux si le deuxième flux de courant est supérieur à la valeur seuil.

2. Procédé selon la revendication 1, **caractérisé en ce que** pendant le procédé, la tension entre les électrodes de mesure (20, 22) est d'abord de 0 V, et une tension différente de 0 V, par exemple 45,6 V, qui est maintenue au moins jusqu'à la détermination du deuxième flux de courant, n'est appliquée entre les électrodes de mesure (20, 22) que lorsque la température d'enclenchement est atteinte.

3. Procédé selon la revendication 2, **caractérisé en ce que** le premier flux de courant est détecté comme le flux de courant maximal qui est mesuré dans un intervalle d'enclenchement, par exemple de 3 s après l'application de la tension différente de 0 V.

4. Procédé selon la revendication 1, **caractérisé en ce que** pendant le procédé tout entier, une tension constante, par exemple 45,6 V, est appliquée entre les électrodes de mesure (20, 22).

5. Procédé selon l'une quelconque des revendications précédentes, **caractérisé en ce qu'**il est jugé directement que le capteur (10) est conforme lorsque le premier flux de courant est déjà inférieur à la valeur seuil.

6. Procédé selon l'une quelconque des revendications précédentes, **caractérisé en ce que** le temps d'attente est déterminé à partir du premier flux de courant au moyen d'une fonction enregistrée ou au moyen de paires de valeurs enregistrées.

7. Procédé selon l'une quelconque des revendications précédentes, dans lequel le résultat du jugement est transmis à un appareil de contrôle de moteur.

8. Procédé, dans lequel le procédé selon la revendication 6 est exécuté à plusieurs reprises et le résultat du jugement est transmis à l'appareil de commande de moteur toujours à un instant fixe après le début du procédé selon la revendication 6 ou après l'instant d'enclenchement.

9. Appareil de commande (26) qui est conçu pour exécuter chaque étape du procédé selon l'une quelconque des revendications précédentes.

10. Programme informatique qui est conçu pour exécuter chaque étape du procédé selon l'une quelconque des revendications 1 à 8 lorsqu'il est exécuté sur un appareil de commande selon la revendication 9.

11. Support de stockage électronique sur lequel est stocké un programme informatique selon la revendication 10.

12. Appareil de commande électronique (26) qui comprend un support de stockage électronique selon la revendication 11.
